# EUROPÄISCHE PATENTSCHRIFT

(11) **EP 3 328 914 B1**
(45) Veröffentlichungstag und Bekanntmachung des Hinweises auf die Patenterteilung: **09.03.2022**
(21) Anmeldenummer: 16742257.5
(22) Anmeldetag: 20.07.2016
(51) Int. Cl.: C08G 18/24, C08G 18/28, C08G 18/42, C08G 18/62, C08G 18/73, C08G 18/79, C08G 18/80, C09D 175/04, C09D 175/06

(54) **BLOCKIERTE POLYISOCYANATZUSAMMENSETZUNG AUF BASIS VON 1,5-PENTAMETHYLENDIISOCYANAT**
BLOCKED POLYISOCYANATE COMPOSITION BASED ON 1,5-PENTAMETHYLENDIISOCYANATE
COMPOSITION BLOQUEE DE POLYISOCYANATE A BASE DE 1,5-PENTAMETHYLENE DIISOCYANATE

(30) Priorität: 31.07.2015 EP 15179321
(43) Veröffentlichungstag der Anmeldung: 06.06.2018
(73) Patentinhaber: Covestro Intellectual Property GmbH & Co. KG, 51373 Leverkusen (DE)
(72) Erfinder: HECKING, Andreas, 40764 Langenfeld (DE); STEMPFLE, Florian Johannes, 50825 Köln (DE); EGGERT, Christoph, 50733 Köln (DE); GRAHL, Michael, 51375 Leverkusen (DE); GRESZTA-FRANZ, Dorota, 42659 Solingen (DE)
(74) Vertreter: Levpat
(86) Internationale Anmeldenummer: PCT/EP2016/067297
(87) Internationale Veröffentlichungsnummer: WO 2017/021150

(56) Entgegenhaltungen:
- EP-A1- 2 684 867
- EP-A1- 2 684 867
- DE-A1- 19 633 545
- DE-A1- 19 633 545

## Beschreibung

Die Erfindung betrifft eine Polyisocyanatzusammensetzung, umfassend eine Isocyanatgruppen aufweisende Aufbaukomponente, wobei die Isocyanatgruppen zu ≥ 98 % mit wenigstens einer CH-aciden Verbindung umgesetzt sind. Weitere Gegenstände der Erfindung sind die Verwendung der Polyisocyanatzusammensetzung zur Herstellung eines Ein-Komponenten-Systems und das Ein-Komponenten-System, enthaltend die Polyisocyanatzusammensetzung. Darüber hinaus sind ein Verfahren zur Herstellung einer Beschichtung auf einem Substrat, die Beschichtung, erhältlich nach dem Verfahren sowie ein Verbund aus der Beschichtung und dem Substrat weitere Gegenstände der Erfindung.

Die Verwendung von CH-aciden Verbindungen, wie zum Beispiel Diethylmalonat, als Blockierungsmittel für Isocyanatgruppen ist bereits seit langem bekannt (vgl. Petersen, S. in Liebigs Ann. Chem. 1949, 562, 205-229). Vorteilhaft bei diesen Blockierungsmitteln ist der niedrige Einbrennbereich von 80 - 120 °C zur Erzeugung von Lacken. Darüber hinaus weisen sie im Gegensatz zu anderen Blockierungsmitteln ein geringeres Gefahrenpotential auf.

Als nachteilig an solchen CH -aciden blockierten Polyisocyanaten ist ihre Kristallisationstendenz beschrieben. So erstarrt ein Diethylmalonat blockiertes Polyisocyanurat auf Basis von 1,6-Hexamethylendiisocyanat (HDI) trotz beträchtlicher Lösemittelmenge nach einigen Tagen in einer glasartigen Masse (vgl. Jones, R. in Eur. Coat. J. 2001, 9, 48-51 oder EP 0 600 314).

In DE 24 36 872 werden zwar flüssige Malonester-blockierte Lackpolyisocyanate beschrieben, diese basieren jedoch ausschließlich auf Isophorondiisocyanat (IPDI) und führen aufgrund ihrer niedrigen Funktionalität nur zu einer geringen Vernetzungsdichte. Die entsprechenden blockierten Produkte auf Basis des IPDI-Trimers mit höherer Funktionalität sind hoch viskos, resultieren in spröden Beschichtungen und sind für flexible Lacke nicht geeignet (vgl. DE 30 01 060).

Darüber hinaus wird IPDI oft in Kombination mit anderen linear, aliphatischen Diisocyanaten zur Erzeugung stabiler Malonester-blockierter Polyisocyanate verwendet (wie z.B. das Desmodur BL 3475 der Bayer Material Science AG). Hierbei wird versucht durch die Zugabe des cycloaliphatischen Diisocyanats die Kristallisationsneigung zu verzögern und damit ein Kompromiss zwischen Kristallisationsstabilität und Flexibilität zu erreichen, wobei in beiden Fällen kein Optimum erreicht werden konnte.

Neben der Verwendung von Polyisocyanatmischungen kann die Kristallisationstendenz zusätzlich durch den Einsatz verschiedener Blockierungsmittel herabgesetzt werden. So wird beispielsweise in der Literatur Ethylacetoacetat (vgl. WO 2000/050178) oder Butanonoxim (vgl. WO 01/57109) als zweites Blockierungsmittel verwendet. Diese gemischt blockierten Produkte sind weniger reaktiv und neigen zu thermischer Vergilbung. Darüber hinaus liegt die Einbrenntemperatur des zweiten Blockierungsmittels meist deutlich über dem Einbrennbereich der Malonester, was zusätzlich zu unerwünschten Nebenreaktionen führt.

Stabile Produkte sollte auch die Mischblockierung mit anderen Blockierungsmittel wie z.B. Diisopropylamin (EP 0 600 314), oder 3,5-Dimethylpyrazol (WO 02/55577) liefern. Aber auch bei solchen Produkten ist eine Erhöhung der Einbrenntemperaturen notwendig, was zu vorher ausgeführten Problemen führt.

Nachteilig an den hier beschriebenen Verfahren zur Verbesserung der Lagerstabilität ist zudem, dass sich durch all diese Maßnahmen die Komplexität im Produktionsablauf erhöht und sich dadurch die Wirtschaftlichkeit signifikant verschlechtert.

Eine weitere Möglichkeit zur Stabilisierung von Malonester-blockierten Polyisocyanaten ist die Zugabe von niedermolekularen mono- bzw. difunktionellen Verbindungen mit gegenüber Isocyanat reaktiven Gruppen. So beschreibt US 4,677,180 beispielsweise eine verbesserte Lagerstabilität durch Zugabe eines kurzkettigen Diols. Derartige isocyanatreaktive Additive verbleiben jedoch im Lack und beeinflussen die Eigenschaften der Beschichtung nachteilig.

Zugang zu lagerstabilen Produkten bietet zudem die Modifizierung durch eine Reaktion des blockierten Polyisocyanats mit Formaldehyd (z.B. in WO 01/16202). Wegen der Kennzeichnung des Formaldehyds als krebserregend und erbgutverändernd ist diese Vorgehensweise jedoch in der Praxis nicht relevant.

In US 5,849,855 wurden stabile Malonsäureester-blockierte Vernetzer durch Anpassung des pH-Wertes durch Zugabe von z.B. Dibutylphosphat erhalten. Diese Additive verbleiben im Lack und führen zu den bereits beschriebenen Nachteilen.

Obwohl in der Anmeldung EP 2 684 867 A1 die Verwendung von malonester-blockierten Isocyanaten auf Basis von 1,5-Pentamethylendiisocyanat, innerhalb einer langer Listen möglicher Blockierungsmittel bereits erwähnt wird, existieren bis heute keinerlei konkrete Beschreibungen, die einen technischen oder wirtschaftlichen Vorteil derartiger blockierter Systeme offenbaren.

Eine Möglichkeit, wie mit CH-aciden Verbindungen blockierte Polyisocyanate erhalten werden können, die eine sehr geringe Kristallisationsneigung aufweisen, lagerstabil sind, und eine bei niedrigerer Temperatur beginnende physikalische Aushärtung sowie eine höhere Beständigkeit der aus diesen Polyisocyanaten erhältlichen Beschichtungen gegenüber organischen Lösungsmitteln als die im Stand der Technik bekannten Systeme aufweisen, ist noch nicht bekannt.

Aufgabe der vorliegenden Erfindung war es daher eine mit CH-aciden Verbindungen blockierte Polyisocyanatzusammensetzung bereitzustellen, welche eine sehr geringe Kristallisationsneigung aufweist, lagerstabil ist und eine bei niedrigerer Temperatur beginnende physikalische Aushärtung sowie eine höhere Beständigkeit der aus dieser Polyisocyanatzusammensetzung erhältlichen Beschichtungen gegenüber organischen Lösungsmitteln im Vergleich zu den im Stand der Technik bekannten Systemen erreicht.

Diese Aufgabe wurde erfindungsgemäß gelöst, durch eine Polyisocyanatzusammensetzung, umfassend eine Isocyanatgruppen aufweisende Aufbaukomponente, wobei die Isocyanatgruppen zu ≥ 98 % mit wenigstens einer CH-aciden Verbindung umgesetzt sind, dadurch gekennzeichnet, dass die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat, besteht und der zu 100 Gew.-% fehlende Anteil der insgesamt in der Aufbaukomponente enthaltenen Menge an Polyisocyanaten aus wenigstens einem aliphatischen oder cycloaliphatischen und von 1,5-Pentamethylendiisocyanat verschiedenen Polyisocyanat besteht und mindestens 5 Gew.-% beträgt.

Der Vorteil eines mehrheitlichen Einsatzes von wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat, bietet neben einer verbesserten Lagerstabilität, auch eine bei niedrigerer Temperatur beginnende physikalische Aushärtung sowie eine höhere Beständigkeit der aus der erfindungsgemäßen Polyisocyanatzusammensetzung erhältlichen Beschichtungen gegenüber organischen Lösungsmitteln.

Vorliegend wird unter Lagerstabilität verstanden, dass die erfindungsgemäße Polyisocyanatzusammensetzung mindestens 6 Wochen bei Raumtemperatur als optisch klare Lösung, ohne erkennbare Feststoffbildung vorliegt.

Vorliegend werden unter Trimerstrukturen folgende, aus Diisocyanaten gebildete Isocyanuratstruktureinheiten verstanden, die gemäß der oligomeren Verteilung statistisch miteinander verknüpft sind:

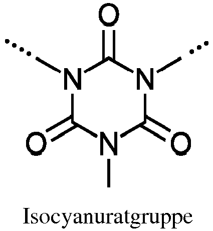

Die Angabe des Gehalts an Isocyanurattrimer als Gewichtsanteil bezogen auf das Gesamtgewicht der jeweiligen Polyisocyanate bezieht sich erfindungsgemäß auf die Verbindungen in der Polyisocyanatzusammensetzung, die genau eine Isocyanuratgruppe und drei Isocyanatgruppen enthalten. Der Gehalt an Isocyanurattrimer wird mittels Gelpermeations Chromatographie (GPC) nach der DIN 55672-1 als Flächenprozent (Fl.-%) bestimmt.

Erfindungsgemäß bedeuten die Bezugnahmen auf "umfassend", "enthaltend" usw. bevorzugt "im Wesentlichen bestehend aus" und ganz besonders bevorzugt "bestehend aus".

In einer ersten bevorzugten Ausführungsform besteht die Aufbaukomponente zu mindestens 60 Gew.-%, bevorzugt zu mindestens 70 Gew.-% und besonders bevorzugt zu mindestens 80 Gew.-%, aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat. Hieraus ergibt sich unter anderem der Vorteil, dass die Lagerstabilität weiter erhöht werden kann.

Zusätzlich ergibt sich der Vorteil, dass der biobasierte Anteil an der erfindungsgemäßen Polyisocyanatzusammensetzung weiter erhöht werden kann. Für diesen Fall ist es daher ganz besonders bevorzugt, wenn die Aufbaukomponente zu 100 Gew-% aus wenigstens einem Polyisocyanat basierend auf 1,5-Pentamethylendiisocyanat besteht.

In einer weiteren bevorzugten Ausführungsform ist der Gehalt an Isocyanurattrimer ≥ 36 Fl.-% und ≤ 56 Fl.-%, bevorzugt ≥ 38 Fl.-% und ≤ 51 Fl.-%, bezogen auf das Gesamtgewicht der Polyisocyanate auf Basis von 1,5-Pentamethylendiisocyanat.

Gemäß einer weiteren bevorzugten Ausführungsform besteht der zu 100 Gew.-% fehlende Anteil der insgesamt in der Aufbaukomponente enthaltenen Menge aus wenigstens einem aliphatischen oder cycloaliphatischen und von 1,5-Pentamethylendiisocyanat verschiedenen Polyisocyanat und beträgt mindestens 10 Gew.-% und bevorzugt mindestens 15 Gew.-%.

Die Polyisocyanate basierend auf 1,5-Pentamethylendiisocyanat sind beliebige durch Modifizierung von 1,5-Pentamethylendiisocyanat (PDI) erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 und EP 0 798 299 A1 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI.

Das zur Herstellung der auf 1,5-Pentamethylendiisocyanat basierenden Polyisocyanate eingesetzte PDI ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Der Gehalt an Isocyanurattrimer lässt sich durch entsprechende Reaktionsführung einstellen, so wird die Trimerisierungsreaktion vorzugsweise nach Erreichen des gewünschten Gehalts an Isocyanurattrimer abgebrochen. Dies kann beispielsweise durch Abkühlen des Reaktionsgemisches auf Raumtemperatur erfolgen. Im Allgemeinen wird die Umsetzung aber durch Zugabe eines oder mehrerer dem Fachmann bekannter Katalysatorgifte und gegebenenfalls nachfolgendes kurzzeitiges Erhitzen der Reaktionsmischung beispielsweise auf eine oberhalb 80 °C liegende Temperatur beendet.

Die, von Polyisocyanaten basierend auf 1,5-Pentamethylendiisocyanat verschiedenen, aliphatischen oder cycloaliphatischen Polyisocyanate sind beliebige durch Modifizierung von geeigneten monomeren Diisocyanaten erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 beispielhaft beschrieben sind, durch Umsetzung eines Teils der Isocyanatgruppen der monomeren Diisocyanate unter Bildung von Polyisocyanatmolekülen, die aus mindestens zwei Diisocyanatmolekülen bestehen, und einer sich in der Regel anschließenden destillativen oder extraktiven Abtrennung der nicht umgesetzten monomeren Diisocyanate.

Geeignete monomere Diisocyanate sind insbesondere solche des Molekulargewichtsbereichs 140 bis 400, wie z. B. 1,4-Diisocyanatobutan, 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI) oder beliebige Gemische solcher Diisocyanate.

Generell ist es bevorzugt, wenn der Restmonomerengehalt an monomeren Diisocyanaten in der erfindungsgemäßen Polyisocyanatzusammensetzung unter 0,5 Gew.-%, besonders bevorzugt unter 0,3 Gew.-% liegt. Die Bestimmung der Restmonomergehalte kann beispielsweise gaschromatographisch nach der DIN EN ISO 10283 erfolgen.

Es ist weiterhin bevorzugt, dass der zu 100 Gew.-% fehlende Anteil der insgesamt in der Aufbaukomponente enthaltenen Menge an Polyisocyanaten aus wenigstens einem aliphatischen Polyisocyanat besteht. Hieraus ergibt sich unter anderem der Vorteil, dass aus dieser Polyisocyanatzusammensetzung erhältliche Beschichtungen besonders gute physiko-chemische Eigenschaften aufweisen.

Bei den CH-aciden Verbindungen handelt es sich beispielsweise um Ester oder cyclische Ketone, wie z.B. Meldrums Säure, Diethylmalonat, Dimethylmalonat, Methylacetoacetat, Ethylacetoacetat, Di-tert-butylmalonat, 1-tert-Butyl-3-methylmalonat, tert-Butylacetoacetat, 2-Acetylacetoxyethylmethacrylate, Acetylaceton, Cyanoethylacetat, Cyclopentanon-2-carboxymethylester, Cyclopentanon-2-carboxyethylester, Cyclohexanon-2-carboxymethylester, Cyclohexanon-2-carboxyethylester, Cyclopentanon-2-carbonsäurenitril oder Cyclopentanon-2-carbonylmethan.

In einer weiteren bevorzugten Ausführungsform wird die CH-acide Verbindung aus der Gruppe Meldrums Säure, Diethylmalonat, Dimethylmalonat, Methylacetoacetat, Ethylacetoacetat, Di-tert-butylmalonat, 1-tert-Butyl-3-methylmalonat, tert-Butylacetoacetat, 2-Acetylacetoxyethylmethacrylate, Acetylaceton, Cyanoethylacetat, Cyclopentanon-2-carboxymethylester, Cyclopentanon-2-carboxyethylester, Cyclohexanon-2-carboxymethylester und Cyclohexanon-2-carboxyethylester ausgewählt, bevorzugt wird es aus der Gruppe Diethylmalonat, Dimethylmalonat und Ethylacetoacetat ausgewählt und besonders bevorzugt ist es Diethylmalonat.

Neben der Isocyanatgruppen aufweisenden Aufbaukomponente kann die erfindungsgemäße Polyisocyanatzusammensetzung noch weitere Verbindungen enthalten, so ist in einer weiteren bevorzugten Ausführungsform wenigstens ein Kristallisationsinhibitor ausgewählt aus der Gruppe niedermolekularer mono- oder difunktioneller Verbindungen mit gegenüber Isocyanat reaktiven Gruppen, bevorzugt ausgewählt aus der Gruppe verzweigter, niedermolekularer mono- oder difunktioneller Verbindungen mit gegenüber Isocyanat reaktiven Gruppen, enthalten. Geeignete Kristallisationsinhibitoren sind beispielsweise in der US 4,677,180 beschrieben.

Überraschenderweise ist die erfindungsgemäße Polyisocyanatzusammensetzung aber auch lagerstabil, wenn die Polyisocyanatzusammensetzung frei von Kristallisationsinhibitoren ist. Hieraus ergibt sich der Vorteil, dass die Lackeigenschaften nicht negativ beeinflusst werden.

In Weiterbildung der Erfindung ist es besonders bevorzugt, wenn auch die CH-aciden Verbindungen biobasiert sind, bevorzugt wenn das Diethylmalonat und/oder das Ethylacetoacetat aus nachwachsenden Rohstoffen hergestellt wurden. Hierzu werden immer größere Anstrengungen unternommen, so werden bereits heute beispielsweise Diethylmalonat, Malonsäure selbst oder Ethylacetoacetat ausgehend von nachwachsenden Rohstoffen hergestellt. Biobasiertes Diethylmalonat ist beispielsweise von der Firma Lygos Inc. (San Francisco, CA, USA) erhältlich.

Generell kann die erfindungsgemäße Polyisocyanatzusammensetzung lösemittelfrei vorliegen, es können aber auch ein oder mehrere gegenüber den reaktiven Gruppen der eingesetzten Komponenten inerte Lösungsmittel enthalten sein.

Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einer weiteren bevorzugten Ausführungsform enthält die erfindungsgemäße Polyisocyanatzusammensetzung wenigstens ein organisches Lösungsmittel, bevorzugt wenigstens Butylacetat und besonders bevorzugt wenigstens Butylacetat, welches aus nachwachsenden Rohstoffen hergestellt wurde.

Durch Wahl der Menge an Lösungsmittel, kann der Festkörpergehalt der erfindungsgemäßen Polyisocyanatzusammensetzung bei der bevorzugten Mitverwendung organischer Lösungsmittel in weiten Grenzen variiert werden. Hierbei ist es ganz besonders bevorzugt, wenn die erfindungsgemäße Polyisocyanatzusammensetzung einen Festkörpergehalt von ≥ 10 und ≤ 95 Gew.-%, bevorzugt von ≥ 25 und ≤ 85 Gew.-%, aufweist.

Die erfindungsgemäße Polyisocyanatzusammensetzung wird durch Umsetzung der Isocyanatgruppen der in der Isocyanatgruppen aufweisenden Aufbaukomponente enthaltenen Polyisocyanate mit den vorstehend genannten CH-aciden Verbindungen erhalten. Vorzugsweise findet die Umsetzung der Isocyanatgruppen mit den CH-aciden Verbindungen unter basischen Bedingungen statt, beispielsweise kann Natriummethanolat als Base eingesetzt werden. Die Umsetzung gilt als abgeschlossen, wenn die Isocyanatgruppen Bande (NCO Bande, Absorptionsmaximum bei 2263 - 2275 cm⁻¹) im IR-Spektrum verschwunden ist.

Durch die Umsetzung werden die Isocyanatgruppen der Polyisocyanate in stabile Addukte überführt, die mit Polyolen bei Raumtemperatur lagerstabile Abmischungen ergeben. Bei Temperaturen von > 80 °C gibt das Blockierungsmittel die Isocyanatgruppe für die Vernetzung mit der Polyolkomponente frei.

Daher ist die erfindungsgemäße Polyisocyanatzusammensetzung sehr gut zur Herstellung eines Ein-Komponenten-Systems geeignet, somit ist eine solche Verwendung ein weiterer Gegenstand der Erfindung. Hierzu wird die erfindungsgemäße Polyisocyanatzusammensetzung mit weiteren, im Folgenden beschriebenen Verbindungen vermischt.

Ein Ein-Komponenten-System enthaltend wenigstens eine erfindungsgemäße Polyisocyanatzusammensetzung, wenigstens ein Polyol, wenigstens ein Verlaufshilfsmittel und gegebenenfalls weitere Hilfs und Zusatzstoffe ist ein weiterer Gegenstand der Erfindung. Das erfindungsgemäße Ein-Komponenten-System zeichnet sich vorteilhafterweise durch eine bei niedrigerer Temperatur beginnende physikalische Trocknung im Vergleich zu herkömmlichen, blockierten Ein-Komponenten-Systemen aus.

Geeignete Polyole sind beispielsweise Polyetherpolyole, Polyesterpolyole, Polycarbonatpolyole oder Polyacrylatpolyole.

Bei den gegebenenfalls enthaltenen Hilfs- und Zusatzstoffen kann es sich beispielsweise um, dem Fachmann bekannte, Cobindemittel, Trocknungsmittel, Füllstoffe, Colöser, Farb- oder EffektPigmente, Verdicker, Mattierungsmittel, Lichtschutzmittel, Lackadditive, wie Dispergiermittel, Verdicker, Entschäumer und andere Hilfsmittel, wie Haftmittel, Fungizide, Bakterizide, Stabilisatoren oder Inhibitoren und Katalysatoren oder Emulgatoren handeln.

Ein weiterer Gegenstand der Erfindung ist ein Verfahren zur Herstellung einer Beschichtung auf einem Substrat, bei dem das erfindungsgemäße Ein-Komponenten-System auf das Substrat aufgebracht und bei einer Temperatur > 80 °C und < 130 °C, bevorzugt > 90 °C und < 110 °C ausgehärtet wird.

Die Applikation des erfindungsgemäßen Ein-Komponenten-Systems kann nach bekannten Methoden, beispielsweise durch Spritzen, Streichen, Fluten oder mit Hilfe von Walzen oder Rakeln auf beliebige Substrate erfolgen.

Als Substrate eignen sich beispielsweise Metall, Glas, Stein, keramische Materialien, Beton, Kunststoffe, Composite, Textilien, Leder oder Papier, die vor der Beschichtung gegebenenfalls auch mit üblichen Grundierungen versehen werden können. Besonders bevorzugte Substrate sind Substrate, die eine Oberfläche aus Metall und/oder Kunststoff aufweisen.

Mit Hilfe des erfindungsgemäßen Verfahrens lassen sich Beschichtungen erhalten, die eine verbesserte Beständigkeit gegenüber organischen Lösungsmitteln aufweisen. Zudem ermöglicht die erfindungsgemäße Polyisocyanatzusammensetzung eine bei niedrigerer Temperatur beginnende physikalische Trocknung des Ein-Komponenten-Systems im Vergleich zu den bekannten Systemen.

Daher ist eine Beschichtung, hergestellt oder herstellbar nach dem erfindungsgemäßen Verfahren ein weiterer Gegenstand der Erfindung.

Neben der Beschichtung selbst ist ein Verbund aus der erfindungsgemäßen Beschichtung und einem Substrat mit einer Oberfläche aus Metall und/oder Kunststoff ein weiterer Gegenstand der Erfindung.

Im Nachfolgenden wird die Erfindung an Beispielen näher erläutert.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Messung der Hazen-Farbzahl erfolgte spektrofotometrisch nach DIN EN 1557 in einer 40 mm Rechteckküvette mit einem LICO 400-Spektrofotometer der Fa. Lange, DE.

Mittels Gelpermentations Chromatographie (GPC) wurde der Gehalt an Isocyanurattrimer nach der DIN 55672-1 bestimmt. Der Bestimmungsbereich des verwendeten Säulensatzes lag im Bereich zwischen 100 und 20000 Dalton. Die Auswertung erfolgte mittels WIN GPC von Polymer Standard Services GmbH Mainz.

Die Lagerstabilität wurde dadurch bestimmt, das die blockierten Polyisocyanatzusammensetzungen jeweils nach Lagerung bei Raumtemperatur für 1, 2, 3, 4, 5, 6, Tagen, 1, 2, 3, 4, 5 und 6 Wochen optisch beurteilt wurden. Wenn nach mindestens 6 Wochen eine optisch klare Lösung ohne erkennbare Feststoffbildung vorlag, wurde das entsprechende blockierte Polyisocyanat als lagerstabil eingestuft.

### Polyisocyanate

### Polyisocyanat A1:

1000 g (6,49 mol) 1,5-Pentamethylendiisocyanat (PDI) wurden in einen Vierhalskolben ausgestattet mit Rührer, Rückflusskühler, N₂-Durchleitungsrohr und Innenthermometer vorgelegt, dreimal bei Raumtemperatur durch Anlegen eines Vakuums von ca. 50 mbar entgast und mit Stickstoff belüftet. Anschließend wurde der Ansatz auf 60°C erwärmt und die Katalysatorlösung (1,5 %ige N,N,N-Trimethyl-N-benzylammoniumhydroxid Lösung in einem 1:1-Gemisch von Methanol und 2-Ethyl-1-hexanol) in einer solchen Geschwindigkeit zudosiert, dass sich die Temperatur des Reaktionsgemisches trotz der exotherm einsetzenden Trimerisierungsreaktion auf maximal 80°C erwärmte. Nach Erreichen eines NCO-Gehalts von 36,5 Gew.-% wurde mit Dibutylphosphat (äquimolare Menge bezogen auf eingesetztes Trimethylbenzylammoniumhydroxid) die Reaktion gestoppt und das nicht umgesetzte monomere PDI bei einer Temperatur von 140°C und einem Druck von 0,5 mbar im Dünnschichtverdampfer abgetrennt. Es wurde ein praktisch farbloses Polyisocyanuratpolyisocyanat erhalten, das die folgenden Kenndaten aufwies:

| | |
|---|---|
| NCO-Gehalt: | 21,2 % |
| NCO-Funktionalität (ber.): | ca. 3,5 |
| Gehalt an Isocyanurattrimer laut GPC: | 40 % |
| Viskosität (23 °C): | 9850 mPas |
| monomeres PDI: | 0,05 % |
| Farbzahl (APHA): | 34 Hazen |

### Polyisocyanat A2:

Nach dem für Polyisocyanatkomponente A1 beschriebenen Verfahren und unter Verwendung der dort beschriebenen Katalysatorlösung wurden 1000 g (6,49 mol) PDI bis zu einem NCO-Gehalt von 47,8 % umgesetzt. Nach Deaktivierung des Katalysators und anschließender destillativer Entfernung des nicht umgesetzten monomeren PDI mit Hilfe eines Dünnschichtverdampfers bei 140°C und 0,5 mbar erhielt man ein praktisch farbloses Polyisocyanuratpolyisocyanat, das die folgenden Kenndaten aufwies:

| | |
|---|---|
| NCO-Gehalt: | 24,2 % |
| NCO-Funktionalität (ber.): | ca. 3,5 |
| Gehalt an Isocyanurattrimer laut GPC: | 64 % |
| Viskosität (23 °C): | 2510 mPas |
| monomeres PDI: | 0,05 % |
| Farbzahl (APHA): | 53 Hazen |

### Polyisocyanat A3:

Isocyanuratgruppen-haltiges Polyisocyanate auf Basis von HDI mit einem NCO-Gehalt von 21,8 %, einer mittleren NCO-Funktionalität von 3,5 (nach GPC), einem Gehalt an monomerem HDI von 0,1 % und einer Viskosität von 3000 mPas (23 °C).

| | |
|---|---|
| Gehalt an Isocyanurattrimer laut GPC: | 53 % |

### Polyisocyanat A4:

90 %ige Lösung in Butylacetat eines isocyanuratgruppen-haltigen Polyisocyanates auf Basis von HDI mit einem NCO-Gehalt von 17,8 %, einer mittleren NCO-Funktionalität von 4,0 (nach GPC), einem Gehalt an monomerem HDI von 0,1 % und einer Viskosität von 1800 mPas (23 °C).

| | |
|---|---|
| Gehalt an Isocyanurattrimer laut GPC: | 31 % |

### Polyisocyanatzusammensetzungen

**Beispiel 1** (Vergleichsbeispiel):
90,8 g Polyisocyanat A2 und 55,8 g (0,35 mol) Diethylmalonat werden unter trockenem Stickstoff und Rühren bei Raumtemperatur vorgelegt. Anschließend wurden 1,3 g NaOCH₃-Lösung (30 % in Methanol) zusammen mit 27,9 g (0,17 mol) Diethylmalonat zugetropft. Nach Abklingen der exothermen Reaktion wurde 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung. Die Viskosität des so erhaltenen blockierten Polyisocyanatvernetzers betrug 710 mPas bei 23 °C.

**Beispiel 2** (erfindungsgemäß):
395,5 g Polyisocyanat A1 und 213,6 g (1,3 mol) Diethylmalonat wurden unter trockenem Stickstoff und Rühren bei Raumtemperatur vorgelegt. Anschließend wurden 4,8 g NaOCH₃-Lösung (30 % in Methanol) zusammen mit 106,8 g (0,7 mol) Diethylmalonat zugetropft. Nach Abklingen der exothermen Reaktion wurde 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung. Die Viskosität des so erhaltenen blockierten Polyisocyanatvernetzers betrug 1250 mPas bei 23 °C.

**Beispiel 3** (erfindungsgemäß):
283,4 g Polyisocyanat A1 und 138,1 g Polyisocyanat A3 wurden zusammen mit 229,6 g (1,44 mol) Diethylmalonat unter trockenem Stickstoff und Rühren bei Raumtemperatur vorgelegt. Anschließend wurden 5,2 g NaOCH₃-Lösung (30 % in Methanol) zusammen mit 114,8 g (0,71 mol) Diethylmalonat zugetropft. Nach Abklingen der exothermen Reaktion wurde 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung. Die Viskosität des so erhaltenen blockierten Polyisocyanatvernetzers betrug 957 mPas bei 23 °C.

**Beispiel 4** (Vergleichsbeispiel):
207,6 g Polyisocyanat A1 und 202,3 g Polyisocyanat A3 wurden zusammen mit 224,2 g (1,41 mol) Diethylmalonat unter trockenem Stickstoff und Rühren bei Raumtemperatur vorgelegt. Anschließend wurden 5,0 g NaOCH₃-Lösung (30 % in Methanol) zusammen mit 112,1 g (0,69 mol) Diethylmalonat zugetropft. Nach Abklingen der exothermen Reaktion wurde 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung. Die Viskosität des so erhaltenen blockierten Polyisocyanatvernetzers betrug 755 mPas bei 23 °C.

**Beispiel 5** (Vergleichsbeispiel, blockiertes HDI-Polyisocyanat):
125,2 g Polyisocyanat A3 wurden mit 69,4 g, (0,44 mol) Diethylmalonat unter trockenem Stickstoff und Rühren vorgelegt Anschließend wurden 1,6 g NaOCH₃-Lösung (30 % in Methanol) zusammen mit 34,7 g (0,21 mol) Diethylmalonat zugetropft. Nach Abklingen der exothermen Reaktion wurde man 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung, die nach dem Abkühlen auf Raumtemperatur über Nacht auskristallisierte.

**Beispiel 6** (Vergleichsbeispiel, blockiertes HDI-Polyisocyanat):
470,1 g Polyisocyanatkomponente A4 wurden mit 213,6 g, (1,3 mol) Diethylmalonat unter trockenem Stickstoff und Rühren vorgelegt Anschließend wurde 1,6 g NaOCH₃-Lösung (30 % in Methanol) zusammen mit 106,8 g (0,7 mol) Diethylmalonat zugetropft. Nach Abklingen der exothermen Reaktion wurde 4 Stunden bei 70 °C nachgerührt, bis im IR-Spektrum die NCO Bande verschwunden ist. Anschließend wurde das Produkt mit Butylacetat auf einen Festkörpergehalt von 70 Gew.-% eingestellt. Man erhält eine farblose klare Lösung, die nach dem Abkühlen auf Raumtemperatur langsam eintrübte und nach drei Tagen vollständig auskristallisierte.

### Prüfung der Lagerstabilität

Zur Überprüfung der Lagerstabilität wurden die erhaltenen, blockierten Polyisocyanatzusammensetzungen bei Raumtemperatur gelagert und über einen Zeitraum von mehreren Wochen in regelmäßigen Abständen kontrolliert, die Ergebnisse sind in Tabelle 1 dargestellt.

**Tabelle 1: Überprüfung der Lagerstabilität der Polyisocyanatzusammensetzungen**

| | **Beispiel 1 (Vgl.)** | **Beispiel 2 (erf.)** | **Beispiel 3 (erf.)** | **Beispiel 4 (Vgl.)** | **Beispiel 5 (Vgl.)** | **Beispiel 6 (Vgl.)** |
|---|---|---|---|---|---|---|
| nach 1 Tag | | | | | Kristallisation | |
| nach 2 Tagen | | | | | | |
| nach 3 Tagen | | | | | | Kristallisation |
| nach 4 Tagen | | | | Kristallisation | | |
| nach 5 Tagen | | | | | | |
| nach 6 Tagen | | | | | | |
| nach 1 Wo. | | | | | | |
| nach 2 Wo. | Kristallisation | | | | | |
| nach 3 Wo. | | | | | | |
| nach 4 Wo. | | | | | | |
| nach 5 Wo. | | | | | | |
| nach 6.Wo. | | stabil, klare Lsg. | stabil, klare Lsg. | | | |

| | | | | | | |
|---|---|---|---|---|---|---|
| Mit "Kristallisation" in Tabelle 1 ist das Vorhandensein von mehrheitlich kristallinen Anteilen an der Polyisocyanatzusammensetzung gemeint. | | | | | | |

### Anwendungstechnische Prüfung

Um die anwendungstechnische Tauglichkeit praxisgerecht zu vergleichen wurden Ein-Komponenten-PUR Einbrennklarlacke anhand der in Tabelle 2 angeführten Rezepturen hergestellt. Dabei wurden jeweils das Diethylmalonat blockierte PDI Polyisocyanat des erfindungsgemäßen Beispiels 2 gegen ein Diethylmalonat blockiertes Mischpolyisocynat auf Basis einer HDI/IPDI Mischung (Desmodur^{®} BL 3475, Fa. Bayer Material Science AG), katalysiert als auch unkatalysiert untersucht.

**Tabelle 2: Übersicht der verwendeten Verbindungen und Parameter**

| | |
|---|---|
| Polyisocyanat: | Beispiel 2 (erfindungsgemäß), NCO-Gehalt blockiert 8,2 % |
| | Desmodur^{®} BL 3475: Mischung aus 7 Gew.-% IPDI-Polyisocyanurat und 35 Gew.-% HDI-Polyisocyanurat 21 Gew.-% Diethylmalonat und 11 Gew.-% Ethylacetoacetat und 26 Gew.-% Butylacetat/Solyentnaptha (1:1), NCO-Gehalt blockiert 8,2 %, Fa. Bayer Material Science AG |
| Bindemittel: | Setalux D A 665, Fa. Nuplex, Festkörper 65 %, Säurezahl 6,9mg KOH/g, OH-Gehalt 3,04 % |
| | Desmophen T 1665, Fa. BayerMaterial Science AG, Festkörper 65 %, Säurezahl 5,5mg KOH/g, OH-Gehalt 1,7 % |
| Katalysator: | DABCO T 12, Fa. Air Products and Chemicals, 0,5 % berechnet auf Festanteil des Bindemittels |
| Verlaufsmittel: | Byk 355, Fa. Byk Chemie, 0,2 % auf Gesamtrezeptur |
| Lösemittel: | Butylacetat/Methoxypropylacetat/Xylol (Verhältnis: 1/1/1) |
| Lackfestkörper: | 55 % |
| Vernetzungsverhältnis: | NCO:OH = 1:1 |
| Applikation: | 120 µm Nassfilm auf Glas |
| Trocknung: | 15 min Ablüften bei Raumtemperatur / 20 min bei 100°C (110°C, bzw. 120°C, bzw. 130°C) |

### Durchgeführte Untersuchungen

Auslaufzeit: DIN 4 mm Becher (DIN 53211)
Dynamisch-mechanische Analyse (DMA):
   Gerät: Analysator DMA 2980 (Fa. TA-Instruments)
   Kalibrierung : Temperatur Indium in Glasgewebe
   Messung : Dual Cantilever Klemmen
   Deformationsamplitude 0,2mm, Anregung 2Hz
   Aufheizung von RT auf +250°C, Heizrate 2K/min
Lösemittelbeständigkeit: Einwirkzeit 1 min, bzw. 5 min (DIN EN ISO 4628-1)
Pendelhärte nach König: DIN EN ISO 1522

Die Auslaufzeit gibt eine allgemeine Auskunft über die Verarbeitungsfähigkeit einer Formulierung in den verschieden Applikationsverfahren wie z.B. Spritzen, Rollen, Tauchen.

Die in Tabelle 4 dargestellten Auslaufzeiten der beiden blockierten Polyisocyanate katalysiert als auch unkatalysiert in Kombination mit dem Polyester zeigen, dass die Unterschiede der Auslaufzeiten nicht von lacktechnischer Bedeutung sind, somit vernachlässigt werden können.

Die dynamisch-mechanische Analyse gilt als Maß für die physikalisch messbare Reaktivität im Bezug zur Temperatur und gibt dem Fachmann Auskunft, ob und in welchem Temperaturbereich die Aushärtung (Vernetzung) beginnt. Wie in Tabelle 3 ersichtlich zeigen sich die auf Basis der PDI Polyisocyanat blockierten Systeme in den DMA Untersuchungen gegenüber dem Desmodur BL 3475 vorteilhaft, es wurde festgestellt, dass der Härtungsbeginn als auch der Vernetzungsbeginn (Härtungs-Onset) bei einer deutlich niedrigeren Temperatur im Vergleich zum etablierten Standardsystem mit Desmodur BL 3475 stattfindet. Dies ermöglicht dem Anwender bei Verwendung der erfindungsgemäßen Polyisocyanatzusammensetzung die Aushärtung bei einer niedrigeren Temperatur durchzuführen, was die ökonomische als auch ökologische Bilanz seines Verfahrens verbessert.

Pendelhärte nach König (DIN EN ISO 1522) gilt als Maß der Belastbarkeit von Beschichtungen gegenüber einer mechanischen Beanspruchung. Hier zeigen die in Tabelle 4 zusammengefassten Ergebnisse lediglich marginale Unterschiede bei der jeweils genannten Einbrenntemperatur. Es werden dabei das Polyisocyanat des erfindungsgemäßen Beispiels 2 und das Desmodur BL 3475 (katalysiert als auch unkatalysiert) in den Formulierungen mit Polyester und Polyacrylat verglichen.

Untersuchungen zur Anlösbarkeiten von Beschichtungen unter der Einwirkung von organischen Lösungsmitteln repräsentiert die Vernetzungsdichte im Polymer. Diese praxisrelevante Prüfung zur Bewertung des Verhaltens der Beschichtung gegenüber organischen Lösungsmitteln gibt dem Fachmann Auskunft, ob das System eine ausreichende Vernetzung in Abhängigkeit zur Einbrenntemperatur aufweist.

Zur Prüfung der Anlösbarkeit wurden die eingebrannten Filme mit technischen Qualitäten der organischen Lösemittel Butylacetat (BA), Methoxypropylacetat (MPA), Xylol (X) und Aceton (Ac) nach DIN EN ISO 4628-1 behandelt und beurteilt, wobei entsprechend der DIN EN Norm in der Bewertung 0 = Keine Veränderung bis hin zu 5 = Beschichtung zerstört beurteilt wurde.

Die Ergebnisse der Anlösbarkeiten nach 1 Minute (Tabelle 5) und nach 5 Minuten (Tabelle 6) zeigen, dass die erfindungsgemäße Polyisocyanatzusammensetzung in den jeweils zu vergleichenden Formulierungen (katalysiert bzw. unkatalysiert) mit den beiden genannten Bindemittel (Desmophen T 1665 und Setalux D A 665) bei den untersuchten Einbrenntemperaturen eine deutlich höhere Beständigkeit gegenüber den verwendeten Lösungsmittel aufweist. Damit bestätigt sich die in der DMA beobachtete frühere physikalische Aushärtung des erfindungsgemäßen Polyisocyanats auch in der anwendungsbezogenen Untersuchung der Anlösbarkeiten.

**Tabelle 3: DMA Analysen**

| | **Härtungsbeginn in °C** | **Härtungs-Onset in °C** | Polyol |
|---|---|---|---|
| Beispiel 2 ohne Kat | 76,0 | 89,5 | Desmophen T 1665 |
| Beispiel 2 mit Kat | 75,0 | 88,5 | |
| D'dur BL 3475 ohne Kat | 82,0 | 92,5 | |
| D'dur BL 3475 mit Kat | 83,5 | 93,5 | |
| Beispiel 2 ohne Kat | 74,5 | 84,5 | Setalux D A 665 |
| Beispiel 2 mit Kat | 74,0 | 84,5 | |
| D'dur BL 3475 ohne Kat | 79,5 | 89,5 | |
| D'dur BL 3475 mit Kat | 82,0 | 89,5 | |

**Tabelle 4: Auslaufzeiten [sec.] der Formulierungen vor Einbrennen und die Pendelhärten [sec.] der bei den angegeben Temperaturen eingebrannten Lacksysteme**

| | Auslaufzeit DIN 4 mm in sec. | 100 °C | 110°C | 120 °C | 130 °C | Polyol |
|---|---|---|---|---|---|---|
| Beispiel 2 ohne Katalysator | 48 | 121 | 126 | 126 | 128 | D'phen T 1665 |
| Beispiel 2 mit Katalysator | 48 | 130 | 130 | 133 | 121 | |
| BL 3475 ohne Katalysator | 41 | 111 | 140 | 145 | 155 | |
| BL 3475 mit Katalysator | 41 | 105 | 133 | 146 | 154 | |
| Beispiel 2 ohne Katalysator | 43 | 144 | 195 | 193 | 200 | Setalux D A 665 |
| Beispiel 2 mit Katalysator | 43 | 146 | 193 | 200 | 203 | |
| BL 3475 ohne Katalysator | 30 | 151 | 194 | 200 | 203 | |
| BL 3475 mit Katalysator | 30 | 120 | 187 | 201 | 204 | |

**Tabelle 5: Anlösbarkeiten nach 1 Minute Lösungsmittelbelastung bei verschiedenen Einbrenntemperaturen des Lacksystems**

| | 100 °C | | | | 110 °C | | | | 120 °C | | | | 130 °C | | | | Polyol |
|---|---|---|---|---|---|---|---|---|---|---|---|---|---|---|---|---|---|
| | BA | MPA | X | Ac | BA | MPA | X | Ac | BA | MPA | X | Ac | BA | MPA | X | Ac | |
| Beispiel 2 ohne Katalysator | 2 | 2 | 2 | 5 | 2 | 2 | 3 | 5 | 1 | 1 | 2 | 4 | 1 | 1 | 2 | 4 | D'phen T 1665 |
| Beispiel 2 mit Katalysator | 2 | 2 | 2 | 5 | 2 | 2 | 3 | 4 | 1 | 2 | 2 | 4 | 0 | 1 | 2 | 4 | |
| | | | | | | | | | | | | | | | | | |
| D'dur BL 3475 ohne Katalysator | 2 | 3 | 3 | 5 | 2 | 2 | 2 | 4 | 1 | 2 | 1 | 4 | 1 | 1 | 2 | 4 | |
| D'dur BL 3475 mit Katalysator | 2 | 3 | 3 | 5 | 2 | 2 | 2 | 4 | 1 | 1 | 2 | 4 | 1 | 1 | 1 | 4 | |
| | | | | | | | | | | | | | | | | | |
| Beispiel 2 ohne Katalysator | 0 | 0 | 0 | 4 | 0 | 0 | 0 | 3 | 0 | 0 | 0 | 3 | 0 | 0 | 0 | 3 | Setalux D A 665 |
| Beispiel 2 mit Katalysator | 0 | 0 | 0 | 4 | 0 | 0 | 0 | 4 | 0 | 0 | 0 | 4 | 0 | 0 | 0 | 4 | |
| | | | | | | | | | | | | | | | | | |
| D'dur BL 3475 ohne Katalysator | 2 | 2 | 3 | 5 | 1 | 2 | 3 | 4 | 1 | 2 | 2 | 4 | 1 | 2 | 2 | 4 | |
| D'dur BL 3475 mit Katalysator | 2 | 2 | 2 | 5 | 1 | 1 | 0 | 4 | 1 | 2 | 2 | 4 | 0 | 1 | 1 | 4 | |

**Tabelle 6: Anlösbarkeiten nach 5 Minuten Lösungsmittelbelastung bei verschiedenen Einbrenntemperaturen des Lacksystems**

| | 100 °C | | | | 110 °C | | | | 120 °C | | | | 130 °C | | | | Polyol |
|---|---|---|---|---|---|---|---|---|---|---|---|---|---|---|---|---|---|
| | BA | MPA | X | Ac | BA | MPA | X | Ac | BA | MPA | X | Ac | BA | MPA | X | Ac | |
| Beispiel 2 ohne Katalysator | 4 | 4 | 4 | 5 | 4 | 4 | 4 | 5 | 4 | 4 | 4 | 5 | 4 | 4 | 4 | 5 | D'phen T 1665 |
| | | | | | | | | | | | | | | | | | |
| Beispiel 2mit Katalysator | 4 | 4 | 4 | 5 | 4 | 4 | 4 | 5 | 4 | 4 | 4 | 5 | 4 | 4 | 4 | 5 | |
| | | | | | | | | | | | | | | | | | |
| D'dur BL 3475 ohne Katalysator | 4 | 3 | 4 | 5 | 4 | 3 | 3 | 5 | 4 | 3 | 3 | 4 | 4 | 3 | 3 | 4 | |
| | | | | | | | | | | | | | | | | | |
| D'dur BL 3475 mit Katalysator | 4 | 4 | 4 | 5 | 4 | 4 | 4 | 5 | 4 | 4 | 4 | 5 | 4 | 4 | 4 | 4 | |
| | | | | | | | | | | | | | | | | | |
| Beispiel 2 ohne Katalysator | 1 | 2 | 2 | 4 | 0 | 0 | 1 | 4 | 0 | 0 | 0 | 4 | 0 | 0 | 0 | 4 | Setalux D A 665 |
| | | | | | | | | | | | | | | | | | |
| Beispiel 2mit Katalysator | 0 | 1 | 1 | 4 | 0 | 0 | 1 | 4 | 0 | 0 | 0 | 4 | 0 | 0 | 0 | 4 | |
| | | | | | | | | | | | | | | | | | |
| D'dur BL 3475 ohne Katalysator | 4 | 4 | 4 | 5 | 3 | 3 | 4 | 5 | 0 | 2 | 2 | 4 | 1 | 2 | 2 | 4 | |
| | | | | | | | | | | | | | | | | | |
| D'dur BL 3475 mit Katalysator | 5 | 4 | 5 | 5 | 2 | 2 | 2 | 5 | 2 | 2 | 2 | 5 | 1 | 2 | 2 | 5 | |

## Patentansprüche

1. Polyisocyanatzusammensetzung, umfassend eine Isocyanatgruppen aufweisende Aufbaukomponente, wobei die Isocyanatgruppen zu ≥ 98 % mit wenigstens einer CH-aciden Verbindung umgesetzt sind, **dadurch gekennzeichnet, dass** die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bestimmt mittels GPC nach der DIN 55672-1 und bezogen auf das Gesamtgewicht der Polyisocyanate auf Basis von 1,5-Pentamethylendiisocyanat, besteht und der zu 100 Gew.-% fehlende Anteil der insgesamt in der Aufbaukomponente enthaltenen Menge an Polyisocyanaten aus wenigstens einem aliphatischen oder cycloaliphatischen Polyisocyanat besteht, wobei der zu 100 Gew.-% fehlende Anteil der insgesamt in der Aufbaukomponente enthaltenen Menge an Polyiscyanaten aus wenigstens einem aliphatischen oder cycloaliphatischen und von 1,5-Pentamethylendiisocyanat verschiedenen Polyisocyanat besteht und mindestens 5 Gew.-% beträgt.

2. Polyisocyanatzusammensetzung nach Anspruch 1, **dadurch gekennzeichnet, dass** die Aufbaukomponente zu mindestens 60 Gew.-%, bevorzugt zu mindestens 70 Gew.-% und besonders bevorzugt zu mindestens 80 Gew.-%, aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat, besteht.

3. Polyisocyanatzusammensetzung nach Anspruch 1 oder 2, **dadurch gekennzeichnet, dass** der Gehalt an Isocyanurattrimer ≥ 36 Fl.-% und ≤ 56 Fl.-%, bevorzugt ≥ 38 Fl.-% und ≤ 51 Fl.-%, bezogen auf das Gesamtgewicht der Polyisocyanate auf Basis von 1,5-Pentamethylendiisocyanat, ist.

4. Polyisocyanatzusammensetzung nach einem der Ansprüche 1 bis 3, **dadurch gekennzeichnet, dass** der zu 100 Gew.-% fehlende Anteil der insgesamt in der Aufbaukomponente enthaltenen Menge an Polyiscyanaten, der aus wenigstens einem aliphatischen oder cycloaliphatischen und von 1,5-Pentamethylendiisocyanat verschiedenen Polyisocyanat besteht, mindestens 10 Gew.-%, bevorzugt mindestens 15 Gew.-%, beträgt.

5. Polyisocyanatzusammensetzung nach einem der Ansprüche 1 bis 4, **dadurch gekennzeichnet**, der zu 100 Gew.-% fehlende Anteil der insgesamt in der Aufbaukomponente enthaltenen Menge an Polyisocyanaten aus wenigstens einem aliphatischen Polyisocyanat besteht.

6. Polyisocyanatzusammensetzung nach einem der Ansprüche 1 bis 5, **dadurch gekennzeichnet, dass** die CH-acide Verbindung aus der Gruppe Meldrums Säure, Diethylmalonat, Dimethylmalonat, Methylacetoacetat, Ethylacetoacetat, Di-tert-butylmalonat, 1-tert-Butyl-3-methylmalonat, tert-Butylacetoacetat, 2-Acetylacetoxyethylmethacrylate, Acetylaceton, Cyanoethylacetat und Cyclopentanon-2-carboxymethylester, Cyclopentanon-2-carboxyethylester, Cyclohexanon-2-carboxymethylester und Cyclohexanon-2-carboxyethylester ausgewählt wird, bevorzugt aus der Gruppe Diethylmalonat, Dimethylmalonat und Ethylacetoacetat ausgewählt wird und besonders bevorzugt Diethylmalonat ist.

7. Polyisocyanatzusammensetzung nach einem der Ansprüche 1 bis 6, **dadurch gekennzeichnet, dass** wenigstens ein Kristallisationsinhibitor ausgewählt aus der Gruppe niedermolekularer mono- oder difunktioneller Verbindungen mit gegenüber Isocyanat reaktiven Gruppen, bevorzugt ausgewählt aus der Gruppe verzweigter niedermolekularer mono- oder difunktioneller Verbindungen mit gegenüber Isocyanat reaktiven Gruppen, enthalten ist.

8. Polyisocyanatzusammensetzung nach einem der Ansprüche 1 bis 6, **dadurch gekennzeichnet, dass** die Polyisocyanatzusammensetzung frei von Kristallisationsinhibitoren ist.

9. Polyisocyanatzusammensetzung nach Anspruch 6, **dadurch gekennzeichnet, dass** das Diethylmalonat und/oder das Ethylacetoacetat aus nachwachsenden Rohstoffen hergestellt wurde.

10. Polyisocyanatzusammensetzung nach einem der Ansprüche 1 bis 9, **dadurch gekennzeichnet, dass** die Polyisocyanatzusammensetzung wenigstens ein organisches Lösungsmittel, bevorzugt wenigstens Butylacetat und besonders bevorzugt wenigstens Butylacetat, welches aus nachwachsenden Rohstoffen hergestellt wurde, enthält.

11. Verwendung einer Polyisocyanatzusammensetzung nach einem der Ansprüche 1 bis 10 zur Herstellung eines Ein-Komponenten-Systems.

12. Ein-Komponenten-System, enthaltend wenigstens eine Polyisocyanatzusammensetzung nach einem der Ansprüche 1 bis 10, wenigstens ein Polyol, wenigstens ein Verlaufshilfsmittel und gegebenenfalls weitere Hilfs und Zusatzstoffe.

13. Verfahren zur Herstellung einer Beschichtung auf einem Substrat, bei dem ein Ein-Komponenten-System nach Anspruch 12 auf das Substrat aufgebracht und bei einer Temperatur > 80 °C und < 130 °C, bevorzugt > 90 °C und < 110 °C ausgehärtet wird.

14. Beschichtung, hergestellt oder herstellbar nach einem Verfahren gemäß Anspruch 13.

15. Verbund aus einer Beschichtung nach Anspruch 14 und einem Substrat mit einer Oberfläche aus Metall und/oder Kunststoff.

## Claims

1. Polyisocyanate composition comprising a formation component having isocyanate groups, the isocyanate groups having been reacted to an extent of ≥ 98% with at least one CH-acidic compound, **characterized in that** the formation component consists of ≥ 51% by weight of at least one polyisocyanate based on 1,5-pentamethylene diisocyanate having a content of isocyanurate trimer of ≤ 60 area%, determined by GPC in accordance with DIN 55672-1 and based on the total weight of the polyisocyanates based on 1,5-pentamethylene diisocyanate, and the remaining proportion up to 100% by weight of the total amount of polyisocyanates present in the formation component consists of at least one aliphatic or cycloaliphatic polyisocyanate, wherein the remaining portion up to 100% by weight of the total amount of polyisocyanates present in the formation component consists of at least one aliphatic or cycloaliphatic polyisocyanate different from 1,5-pentamethylene diisocyanate and is at least 5% by weight.

2. Polyisocyanate composition according to Claim 1, **characterized in that** the formation component consists of at least 60% by weight, preferably at least 70% by weight and particularly preferably at least 80% by weight, of at least one polyisocyanate based on 1,5-pentamethylene diisocyanate having a content of isocyanurate trimer of ≤ 60 area%, based on the total weight of the polyisocyanates based on 1,5-pentamethylene diisocyanate.

3. Polyisocyanate composition according to Claim 1 or 2, **characterized in that** the content of isocyanurate trimer is ≥ 36 area% and ≤ 56 area%, preferably ≥ 38 area% and ≤ 51 area%, based on the total weight of the polyisocyanates based on 1,5-pentamethylene diisocyanate.

4. Polyisocyanate composition according to any of Claims 1 to 3, **characterized in that** the remaining proportion up to 100% by weight of the total amount of polyisocyanates present in the formation component, which consists of at least one aliphatic or cycloaliphatic polyisocyanate different from 1,5-pentamethylene diisocyanate, is at least 10% by weight, preferably at least 15% by weight.

5. Polyisocyanate composition according to any of Claims 1 to 4, **characterized in that** the remaining proportion up to 100% by weight of the total amount of polyisocyanates present in the formation component consists of at least one aliphatic polyisocyanate.

6. Polyisocyanate composition according to any of Claims 1 to 5, **characterized in that** the CH-acidic compound is selected from the group comprising Meldrum's acid, diethyl malonate, dimethyl malonate, methyl acetoacetate, ethyl acetoacetate, di-tert-butyl malonate, 1-tert-butyl 3-methyl malonate, tert-butyl acetoacetate, 2-acetylacetoxyethyl methacrylates, acetylacetone, cyanoethyl acetate and cyclopentanone-2-carboxymethyl ester, cyclopentanone-2-carboxyethyl ester, cyclohexanone-2-carboxymethyl ester and cyclohexanone-2-carboxyethyl ester, is preferably selected from the group comprising diethyl malonate, dimethyl malonate and ethyl acetoacetate and is particularly preferably diethyl malonate.

7. Polyisocyanate composition according to any of Claims 1 to 6, **characterized in that** at least one crystallization inhibitor is present selected from the group comprising low molecular weight mono- or difunctional compounds having groups reactive to isocyanate, preferably selected from the group comprising branched low molecular weight mono- or difunctional compounds having groups reactive to isocyanate.

8. Polyisocyanate composition according to any of Claims 1 to 6, **characterized in that** the polyisocyanate composition is free of crystallization inhibitors.

9. Polyisocyanate composition according to Claim 6, **characterized in that** the diethyl malonate and/or the ethyl acetoacetate have been produced from renewable raw materials.

10. Polyisocyanate composition according to any of Claims 1 to 9, **characterized in that** the polyisocyanate composition comprises at least one organic solvent, preferably at least butyl acetate and particularly preferably at least butyl acetate which has been produced from renewable raw materials.

11. Use of a polyisocyanate composition according to any of Claims 1 to 10 for producing a one-component system.

12. One-component system comprising at least one polyisocyanate composition according to any of Claims 1 to 10, at least one polyol, at least one levelling agent and optionally further auxiliaries and additives.

13. Process for producing a coating on a substrate, in which a one-component system according to Claim 12 is applied to the substrate and is cured at a temperature of > 80°C and < 130°C, preferably > 90°C and < 110°C.

14. Coating, produced or which can be produced by a process according to Claim 13.

15. Composite composed of a coating according to Claim 14 and a substrate having a surface of metal and/or plastic.

## Revendications

1. Composition de polyisocyanate, comprenant un composant constitutif présentant des groupes isocyanate, ≥ 98 % des groupes isocyanate étant transformés avec au moins un composé à CH acide, **caractérisée en ce que** le composant constitutif est constitué de ≥ 51 % en poids d'au moins un polyisocyanate à base de diisocyanate de 1,5-pentaméthylène doté d'une teneur en trimère d'isocyanurate de ≤ 60 % en surface, déterminée par CPG selon la norme DIN 55672-1 et par rapport au poids total des polyisocyanates à base de diisocyanate de 1,5-pentaméthylène, et la part manquante à 100 % en poids de la quantité de polyisocyanates contenue au total dans le composant constitutif étant constituée d'au moins un polyisocyanate aliphatique ou cycloaliphatique, la part manquante à 100 % en poids de la quantité de polyisocyanates contenue au total dans le composant constitutif étant constituée d'au moins un polyisocyanate aliphatique ou cycloaliphatique et différent du diisocyanate de 1,5-pentaméthylène et étant d'au moins 5 % en poids.

2. Composition de polyisocyanate selon la revendication 1, **caractérisée** ce que le composant constitutif est constitué d'au moins 60 % en poids, préférablement d'au moins 70 % en poids et particulièrement préférablement d'au moins 80 % en poids, d'au moins un polyisocyanate à base de diisocyanate de 1,5-pentaméthylène doté d'une teneur en trimère d'isocyanurate de ≤ 60 % en surface par rapport au poids total des polyisocyanates à base de diisocyanate de 1,5-pentaméthylène.

3. Composition de polyisocyanate selon la revendication 1 ou 2, **caractérisée** ce que la teneur en trimère d'isocyanurate est ≥ 36 % en surface et ≤ 56 % en surface, préférablement ≥ 38 % en surface et ≤ 51 % en surface, par rapport au poids total des polyisocyanates à base de diisocyanate de 1,5-pentaméthylène.

4. Composition de polyisocyanate selon l'une quelconque des revendications 1 à 3, **caractérisée en ce que** la part manquante à 100 % en poids de la quantité de polyisocyanates contenue au total dans le composant constitutif, qui est constituée d'au moins un polyisocyanate aliphatique ou cycloaliphatique et différent du diisocyanate de 1,5-pentaméthylène, est d'au moins 10 % en poids, préférablement d'au moins 15 % en poids.

5. Composition de polyisocyanate selon l'une quelconque des revendications 1 à 4, **caractérisée en ce que** la part manquante à 100 % en poids de la quantité de polyisocyanates contenue au total dans le composant constitutif est constituée d'au moins un polyisocyanate aliphatique.

6. Composition de polyisocyanate selon l'une quelconque des revendications 1 à 5, **caractérisée en ce que** le composé à CH acide est choisi dans le groupe composé par l'acide de Meldrum, le malonate de diéthyle, le malonate de diméthyle, l'acétoacétate de méthyle, l'acétoacétate d'éthyle, le malonate de di-tert-butyle, le malonate de 1-tert-butyl-3-méthyle, l'acétoacétate de tert-butyle, le méthacrylate de 2-acétylacéthoxyéthyle, l'acétylacétone, l'acétate de cyanoéthyle et l'ester de méthyle de l'acide cyclopentanone-2-carboxylique, l'ester d'éthyle de l'acide cyclopentanone-2-carboxylique, l'ester de méthyle de l'acide cyclohexanone-2-carboxylique et l'ester d'éthyle de l'acide cyclohexanone-2-carboxylique, préférablement est choisi dans le groupe composé par le malonate de diéthyle, le malonate de diméthyle et l'acétoacétate d'éthyle et est particulièrement préférablement le malonate de diéthyle.

7. Composition de polyisocyanate selon l'une quelconque des revendications 1 à 6, **caractérisée en ce qu'**au moins un inhibiteur de cristallisation choisi dans le groupe de composés monofonctionnels ou difonctionnels à bas poids moléculaire comportant des groupes réactifs envers un isocyanate, préférablement choisi dans le groupe de composés monofonctionnels ou difonctionnels à bas poids moléculaire ramifiés comportant des groupes réactifs envers un isocyanate, est contenu.

8. Composition de polyisocyanate selon l'une quelconque des revendications 1 à 6, **caractérisée en ce que** la composition de polyisocyanate est exempte d'inhibiteurs de cristallisation.

9. Composition de polyisocyanate selon la revendication 6, **caractérisée en ce que** le malonate de diéthyle et/ou l'acétoacétate d'éthyle ont été préparés à partir de matières premières renouvelables.

10. Composition de polyisocyanate selon l'une quelconque des revendications 1 à 9, **caractérisée en ce que** la composition de polyisocyanate contient au moins un solvant organique, préférablement au moins de l'acétate de butyle et particulièrement préférablement au moins de l'acétate de butyle qui a été préparé à partir de matières premières renouvelables.

11. Utilisation d'une composition de polyisocyanate selon l'une quelconque des revendication 1 à 10 pour la préparation d'un système à un composant.

12. Système à un composant, contenant au moins une composition de polyisocyanate selon l'une quelconque des revendications 1 à 10, au moins un polyol, au moins un auxiliaire de dilatation et éventuellement d'autres matières auxiliaires et additifs.

13. Procédé pour la préparation d'un revêtement sur un substrat, dans lequel un système à un composant selon la revendication 12 est appliqué sur le substrat et est durci à une température > 80 °C et < 130 °C, préférablement > 90 °C et < 110 °C.

14. Revêtement, préparé ou qui peut être préparé par un procédé selon la revendication 13.

15. Composite composé d'un revêtement selon la revendication 14 et d'un substrat doté d'une surface de métal et/ou de matière plastique.
